(19) Europäisches Patentamt
European Patent Office
Office européen des brevets

(11) **EP 0 407 066 B1**

(12) **EUROPEAN PATENT SPECIFICATION**

(45) Date of publication and mention
of the grant of the patent:
**09.10.1996 Bulletin 1996/41**

(51) Int Cl.6: **G06F 11/10**

(21) Application number: **90306814.6**

(22) Date of filing: **21.06.1990**

(54) **Fault tolerant memory**

Fehlertoleranter Speicher

Mémoire à tolérance de faute

(84) Designated Contracting States:
**AT BE CH DE DK ES FR GB GR IT LI LU NL SE**

(30) Priority: **06.07.1989 US 376357**

(43) Date of publication of application:
**09.01.1991 Bulletin 1991/02**

(73) Proprietor: **QUANTUM CORPORATION
Milpitas California 95035 (US)**

(72) Inventor: **Reiff, Francis Henry
Manitou Springs, Colorado 80829 (US)**

(74) Representative: **Goodman, Christopher et al
Eric Potter & Clarkson
St. Mary's Court
St. Mary's Gate
Nottingham NG1 1LE (GB)**

(56) References cited:
• **IEEE TRANSACTIONS ON COMPUTERS, vol. C-31, no. 7, July 1982, New York, US, pp. 596-602; S. KANEDA et al.: 'Single Byte Error Correcting - Double Byte Error Detecting Codes for Memory Systems'**
• **IBM TECHNICAL DISCLOSURE BULLETIN, vol. 28, no. 5, October 1985, New York, US, pp. 2141-2142; 'Nonvolatile RAM Failure Rate Reduction through the Use of Redundancy and Error-correction Code'**

## Description

The present invention relates to data storage techniques, and more particularly to methods for organizing data in a memory to optimize the memory's tolerance for system faults.

Background of the Invention

Error correction codes (ECC's) have been used to protect data stored in memory systems such as dynamic random access memories (DRAM's). Hamming codes are commonly used for this purpose. Although Hamming codes are useful to protect the DRAM's from acquiring "soft" errors, such as those due to the effects of Alpha particles, they do not protect against complete device or data bus failures in the systems.

The utilization of a ten bit multiburst error correcting Reed-Solomon code has been found to be effective in protecting static RAM (SRAM) or DRAM data from "hard" errors due to memory device or data bus failures. However, the ten bit Reed-Solomon ECC encoder/decoder must have its ten bit wide data bus interfaced with the data bus of the memory system, which is sixteen bits wide. Furthermore, the ten bit ECC symbols must be stored in the SRAM or DRAM in storage locations which are multiples of eight bits. This causes each ten bit symbol to overflow into more than one storage location. Thus, failure of one storage location can cause the failure of two ten bit symbols, which can degrade the performance of the corresponding ECC. Although extra memory storage locations can be provided to insure that the failure of one storage location cannot cause the failure of more than one ten bit symbol, this is wasteful of memory.

IEEE Transactions on Computers, vol. C-31, no. 7, July 1982, pp.596-602 discloses an alternative class of single byte error correcting-double byte error detecting codes to Reed-Solomon codes, which can be constructed for arbitrary code length and byte length, having particular use for byte-organised memory chips.

Summary of the Invention

In accordance with the present invention, as defined in the appended claims, the present invention, in a preferred embodiment, organizes ten-bit ECC symbols for storage in memory devices having eight-bit bytes. Ten-bit Reed-Solomon symbols are created by an encoder/decoder and are present on a ten-bit bus. A data converter converts the symbols so that they are conveyable via a sixteen-bit bus, with all of the ten bits of each ten-bit symbol being conveyable via one of the sixteen bits of the bus. A 640 byte Reed-Solomon data block is stored in twenty byte groups of each of thirty-two eight-bit by 128 kilobyte static RAM devices. The thirty-two RAM devices are organized in two columns of sixteen with all devices of one column receiving the eight least significant bits of the sixteen bit bus and all devices of the other column receiving the eight most significant bits of the sixteen bit bus. The ten-bit symbols are organized vertically in the RAM devices so that the same bit positions of ten different bytes of a given RAM device contain the ten bits of a ten-bit symbol. Each of the thirty-two RAM devices contains only sixteen vertically organized ten-bit symbols within a group of twenty bytes so that any two devices can fail, or any one bit of the sixteen bit bus can fail, and the Reed-Solomon ECC will preserve all data.

Description of the Drawings

Figure 1 is a prior art scheme for accommodating ten bit symbols in devices having multiples of eight bits.

Figure 2 is a block diagram of a memory system including an ECC system which is suitable to use in the present invention.

Figure 3 is a block diagram illustrating the organization of memory according to the present invention.

Description of the Preferred Embodiment

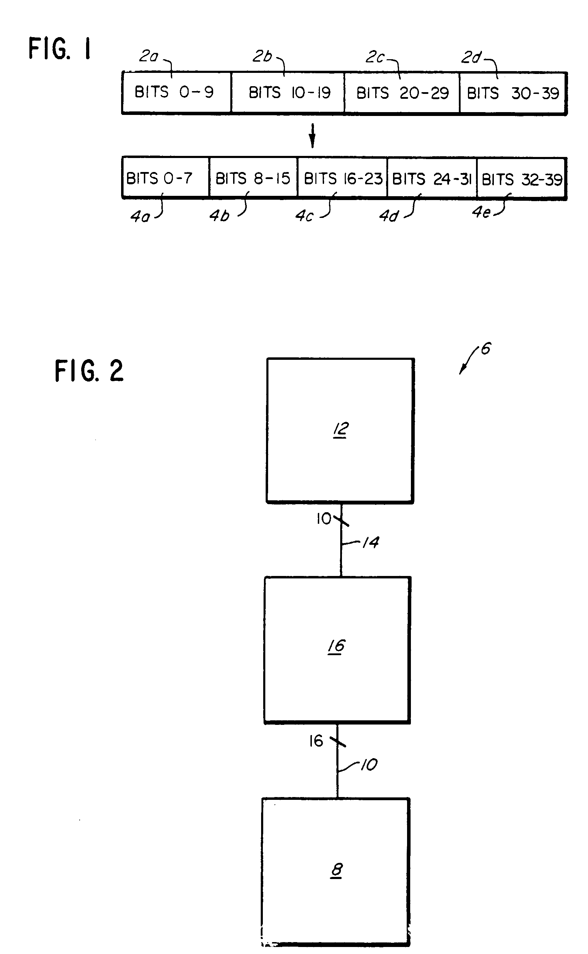

Referring to the drawings, wherein like reference characters designate like or corresponding parts throughout the views, Fig. 1 is a block diagram of the prior art scheme for accommodating ten-bit Reed-Solomon symbols on a bus or device with multiples of eight bits. Ten-bit symbol 2a comprises bits 0-9, symbol 2b comprises bits 10-19, symbol 2c comprises bits 20-29 and symbol 2d comprises bits 30-39. The four ten-bit symbols 2a through 2d are loaded into five consecutive eight-bit random access memory bytes 4a through 4e, to accommodate the symbols in the forty bits provided by the five memory bytes 4a through 4e. The alignment between the symbols and the bytes is also shown, with byte 4a comprising bits 0-7, 4b comprising bits 8-15, 4c comprising bits 16-23, 4d comprising bits 24-31 and 4e comprising bits 32-39. Byte 4a and byte 4e include only one symbol, all other RAMS 4b-4d include more than one symbol. Thus if any of the bytes 4b through 4d fail, two of the symbols 2a through 2d are lost. A fault tolerant memory can be organized based upon this scheme, but more memory bytes must be used.

Figure 2 is a block diagram of a memory system including an ECC system which is suitable to use in the present invention. A memory system 6, such as a cache for a central processing unit (CPU) or a storage device, includes a memory array 8. The memory array 8 typically has an array of 32 static random access memory devices (RAM's) which are each eight bits wide by 128 kilobytes long to provide a total memory capacity of 4 megabytes (4,194,304 bytes). The memory array 8 transfers its data on a 16 bit wide input/output data bus 10.

The 10 bit Reed-Solomon ECC used with the memory array 8 is provided by an ECC encoder/decoder 12. The encoder/decoder 12 decodes and encodes ten bit symbols transferred on a ten bit data bus 14. The symbols on the data bus 14 are not suitable for coupling to the memory array 8 via the data bus 10. This is because the data bus 10 is sixteen bits wide and the data bus 14 is ten bits wide. Furthermore, the ten bit symbols on the data bus 14 must be aligned with the bytes of the RAM's in the memory array 8 to avoid wasting memory bits in the RAM's of the memory array 8.

A data converter 16, coupling the data bus 10 to the data bus 14, provides the necessary bit conversion, data alignment and storage organization to maximize the fault tolerance of the storage device when used in conjunction with an error correcting code (ECC). The data converter 16 also optimizes the fault tolerance for the ECC encoder/decoder 12 so that either two of the 32 RAM's in the memory array 8 or one data bus bit of the data bus 10 can fail without loss of data.

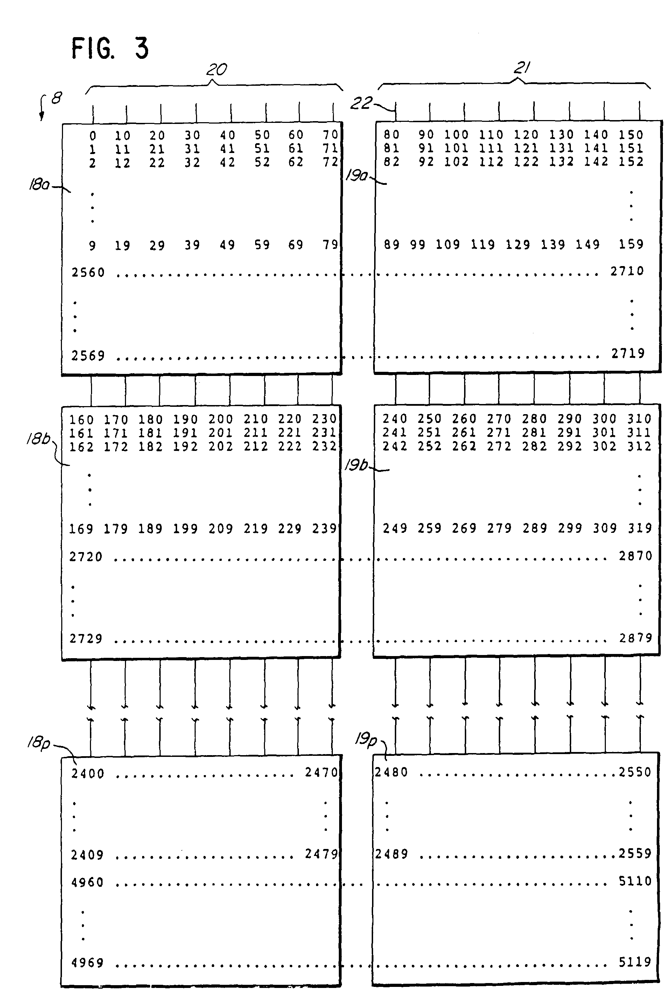

Figure 3 illustrates the organization of data within memory array 8. For clarity, the organization of only one 640 byte block of ECC encoded data is shown, although it should be understood that the entire contents of memory array 8, which may be 4 megabytes, is similarly organized. Data converter 16, in Fig. 2, provides the conversion between standard Reed-Solomon ten-bit symbols on bus 14 and the code illustrated in Fig. 3. With an understanding of the data organization of Fig. 3, therefore, data converter 16 may be implemented in any one of a number of well known ways, such as by way of a simple gate array having special memory cells organized in an array of ten rows and sixteen columns where ten-bit symbols are written to successive columns until the array is full and then sixteen-bit data is read from the rows and appears on data bus 10.

The memory array 8 comprises any suitable number of RAM's of which thirty-two RAM's 18a through 18p and 19a through 19p are illustrated and are used to store one 640 byte block of data according to the present invention. Twenty memory bytes or storage locations, each having eight bits, of each RAM 18a through 18p and 19a through 19p are illustrated and are used to store one 640 byte block of encoded data. The thirty-two RAM's are arranged in two columns of sixteen, with all RAM's of one column, RAM's 18a through 18p, receiving the least significant eight bits, shown at 20, of sixteen-bit data bus 10 and all RAM's of the other column, RAM's 19a through 19p, receiving the most significant eight bits, shown at 21, of sixteen-bit data bus 10. Each memory byte is illustrated as a horizontal eight-bit line within the respective RAM. Other blocks of 640 bytes of encoded data are stored in other groups of twenty bytes in the respective RAM's.

The encoded data 13 is converted by data converter 16 so that it is stored in memory array 8 in an interleaved fashion. As shown in Fig. 3, the first ten-bit symbol, comprising bits 0 through 9 which are simply illustrated in Fig. 3 as the numerals 0 through 9, occupies the first bit positions of the first ten bytes of RAM 18a respectively. Likewise, the second ten-bit symbol, comprising bits 10 through 19, occupies the second bit positions of the first ten bytes of RAM 18a respectively. This pattern of organization continues such that all eight bit positions of the first ten bytes of RAM 18a are occupied with the first eight ten-bit symbols.

By way of further examples, the ninth ten-bit symbol is received by RAM 19a via the least significant of most significant lines 20, shown at 22, and occupies the first bit positions of the first ten bytes of RAM 19a respectively. The 256th ten-bit symbol occupies the eighth bit positions of the first ten bytes of RAM 19p, and the 257th ten-bit symbol occupies the first bit positions of the second ten bytes of RAM 18a. The last or 512th ten-bit symbol occupies the eighth bit positions of the second ten bytes of RAM 19p respectively.

With the data organization described above, only sixteen ten bit symbols are stored in each of the RAM's 18, 19. Since the ten bit Reed-Solomon ECC can correct 32 of the ten bit symbols, two of the RAM's 18 can fail without loss of data. Alternatively, a failure of one of the bits 20, 21 of the sixteen bit data bus 10 can occur, resulting in the loss of 32 of the ten-bit symbols without loss of data.

The fault tolerances of the memory system 6 described above are optimal and may be represented by the relationship:

$$\frac{\text{RAM's failed}}{\text{Total RAM's}} = \frac{\text{Bits correctable by ECC}}{\text{Total bits in data block}} = \frac{1}{16}$$

The vertical symbol scheme also allows:

$$\frac{\text{Bus bits failed}}{\text{Total bus bits}} = \frac{\text{Bits correctable by ECC}}{\text{Total bits in data block}} = \frac{1}{16}$$

Of course, other conversion schemes can be implemented in accordance with the present invention, and it is within the scope of the invention to provide for storing and transferring data symbols with any first number of bits sequentially fed on each bit of a data bus of a second number of bits to data of the second number of bits in length on each bit of a data bus of the first number of bits to provide optimum data organization. In particular, since most memory devices have words in multiples of bytes, or eight bits, the present invention is particularly advantageous in converting ten bit symbols on ten bit data bases to data on a data bus of eight, sixteen, thirty two, or more bits.

Thus there has been described herein a method of optimizing the organization of data comprising symbols with a first number of bits transferred between a first data bus having a second number of bits and a second data bus having the first number of bits with optimal fault tolerance and automatic symbol alignment.

It will be understood that various changes in the details, arrangement and configuration of the parts and systems which have been described and illustrated above in order to explain the nature of the present invention may be made by those skilled in the art within the scope of the present invention as expressed in the appended claims.

## Claims

1. A method for organising multiple-bit error correction code symbols (2a,2b,2c,2d) in a memory (8) wherein a plurality of random access memory devices (18a...19p) are connected to a data bus (10) for conveying the symbols to the devices, said method characterized by the steps of:

conveying the bits of each symbol to one of the memory devices via one of the bit paths of the data bus; and
storing the bits of each symbol in like bit positions of a plurality of memory bytes, the number of bytes being equal to the number of bits in the symbol.

2. The method of claim 1 further including the step of arranging the plurality of random access memory devices in two columns, with the memory devices of a first one of the columns connected to a least significant group of bit paths of the data bus, and the memory devices of a second one of the columns connected to a most significant group of bit paths of the data bus.

3. The method of claim 2 applied to organizing a 640 byte block of ten-bit error correction code symbols, by arranging thirty-two memory devices into said two columns, connecting the memory devices of the first one of the columns to a least significant group of eight bit paths of a sixteen-bit data bus, and connecting the memory devices of the second one of the columns to a most significant group of bit paths of the data bus.

4. A memory system (6) for storing a block of multiple-bit error correction code symbols (2a,2b,2c,2d), comprising a plurality of random access memory devices (18a...19p) arranged in columns, a data bus (10) for conveying the symbols to the devices, characterized in that

one of the columns of memory devices (18a... 18p) is connected to a least significant group of bit paths (20) of the data bus, and a second one of the columns (19a...19p) is connected to a most significant group of bit paths (21) of the data bus, the memory system further including means (14,16,10) for conveying the bits of each symbol to one of the memory devices via one of the bit paths of the data bus; and
means (8) for storing the bits of each symbol in like bit positions of a plurality of memory bytes, the number of bytes being equal to the number of bits in the symbol.

## Patentansprüche

1. Verfahren zum Organisieren von Mehrfachbit-Fehlerkorrektur-Codesymbolen (2a, 2b, 2c, 2d) in einem Speicher (8), bei dem eine Vielzahl von Speichervorrichtungen (18a...19p) mit direktem Zugriff mit einem Datenbus (10) verbunden sind, um die Symbole zu den Vorrichtungen zu fördern, wobei das Verfahren durch die folgenden Schritte gekennzeichnet ist:

Fördern der Bits jedes Symboles zu einer der Speichervorrichtungen über einen der Bitpfade des Datenbusses, und
Speichern der Bits jedes Symboles in ähnlichen Bitpositionen einer Vielzahl von Speicherbytes, wobei die Anzahl der Bytes gleich zu der Anzahl der Bits in dem Symbol ist.

2. Verfahren nach Anspruch 1, weiterhin mit dem Schritt des Anordnens der Vielzahl von Speichervorrichtungen mit direktem Zugriff in zwei Spalten, wobei die Speichervorrichtungen einer ersten der Spalten mit der niederwertigsten Gruppe der Bitpfade des Datenbusses und die Speichervorrichtungen einer zweiten der Spalten mit der höchstwertigen Gruppe der Bitpfade des Datenbusses verbunden sind.

3. Verfahren nach Anspruch 1, angewandt auf ein Organisieren eines 640-Byteblockes der Zehnbit-Fehlerkorrektur-Codesymbole durch Anordnen von zweiunddreißig Speichervorrichtungen in den zwei Spalten, Verbinden der Speichervorrichtungen der ersten der Spalten mit der niederwertigsten Gruppe der acht Bitpfade eines Sechzehnbit-Datenbusses und Verbinden der Speichervorrichtungen der zweiten der Spalten mit der höchstwertigen Gruppe der Bitpfade des Datenbusses.

4. Speichersystem (6) zum Speichern eines Blockes von Mehrfachbit-Fehlerkorrektur-Codesymbolen (2a, 2b, 2c, 2d) mit einer Vielzahl von Speichervorrichtungen (18a...19p) mit direktem Zugriff, die in Spalten angeordnet sind, einem Datenbus (10) zum Fördern der Symbole zu den Vorrichtungen, dadurch gekennzeichnet, daß

eine der Spalten der Speichervorrichtungen (18a...18p) mit der niederwertigsten Gruppe der Bitpfade (20) des Datenbusses verbunden ist und eine zweite der Spalten (19a...19p) mit einer höchstwertigen Gruppe der Bitpfade (21) des Datenbusses verbunden ist, wobei das Speichersystem außerdem aufweist:

eine Einrichtung (14, 16, 10) zum Fördern der Bits jedes Symboles zu einer der Speichervorrichtungen über einen der Bitpfade des Datenbusses, und eine Einrichtung (8) zum Speichern der Bits jedes Symboles in ähnlichen Bitpositionen einer Vielzahl von Speicherbytes, wobei die Anzahl der Bytes gleich zu der Anzahl der Bits in dem Symbol ist.

**Revendications**

1. Procédé pour organiser des symboles de code de correction d'erreur à bits multiples (2a, 2b, 2c, 2d) dans une mémoire (8) dans laquelle une pluralité de dispositifs de mémoire à accès direct (18a...19p) est reliée à un bus de données (10) pour transporter les symboles vers les dispositifs, ledit procédé étant caractérisé par les étapes suivantes :

   transport des bits de chaque symbole vers un des dispositifs de mémoire par l'intermédiaire d'un des trajets de bits du bus de données ; et stockage des bits de chaque symbole dans des positions de bit semblables d'une pluralité de multiplets de mémoire, le nombre de multiplets étant égal au nombre de bits dans le symbole.

2. Procédé selon la revendication 1, comprenant de plus l'étape d'agencement de la pluralité de dispositifs de mémoire à accès direct en deux colonnes, les dispositifs de mémoire d'une première des colonnes étant reliés à un groupe de poids faible de trajets de bits du bus de données, et les dispositifs de mémoire d'une seconde des colonnes étant reliés à un groupe de poids fort de trajets de bits du bus de données.

3. Procédé selon la revendication 2 appliqué à l'organisation d'un bloc de 640 multiplets de symboles de code de correction d'erreur à dix bits, en agençant trente-deux dispositifs de mémoire dans lesdites deux colonnes, reliant les dispositifs de mémoire de la première des colonnes à un groupe de poids faible de huit trajets de bits d'un bus de données à seize bits, et reliant les dispositifs de mémoire de la seconde des colonnes à un groupe de poids fort de trajets de bits du bus de données.

4. Système de mémoire (6) pour stocker un bloc de symboles de code de correction d'erreur à bits multiples (2a, 2b, 2c, 2d), comprenant une pluralité de dispositifs de mémoire à accès direct (18a...19p) agencés en colonnes, un bus de données (10) pour transporter les symboles vers les dispositifs, caractérisé en ce que

une des colonnes des dispositifs de mémoire (18a...18p) est reliée à un groupe de poids faible de trajets de bits (20) du bus de données, et une seconde des colonnes (19a...19p) est reliée à un groupe de poids fort de trajets de bits (21) du bus de données, le système de mémoire comprenant de plus

des moyens (14, 16, 10) pour transporter les bits de chaque symbole vers un des dispositifs de mémoire par l'intermédiaire d'un des trajets de bits du bus de données ; et

des moyens (8) pour stocker les bits de chaque symbole dans des positions de bits semblables d'une pluralité de multiplets de mémoire, le nombre de multiplets étant égal au nombre de bits dans le symbole.

FIG. 1

| 2a | 2b | 2c | 2d |
|---|---|---|---|
| BITS 0-9 | BITS 10-19 | BITS 20-29 | BITS 30-39 |

| BITS 0-7 | BITS 8-15 | BITS 16-23 | BITS 24-31 | BITS 32-39 |
|---|---|---|---|---|
| 4a | 4b | 4c | 4d | 4e |

FIG. 2

```
        6

    ┌─────────┐
    │   12    │
    └────┬────┘
      10 │ 14
    ┌────┴────┐
    │   16    │
    └────┬────┘
      16 │ 10
    ┌────┴────┐
    │    8    │
    └─────────┘
```

# FIG. 3

20                                    21

8

22

18a

| 0 | 10 | 20 | 30 | 40 | 50 | 60 | 70 |
| 1 | 11 | 21 | 31 | 41 | 51 | 61 | 71 |
| 2 | 12 | 22 | 32 | 42 | 52 | 62 | 72 |

.
.
.

| 9 | 19 | 29 | 39 | 49 | 59 | 69 | 79 |

2560 . . . . . . . . . . . . . . . . . . . . . . . . . . . . . . . . . . . . . . . . . . . . . . . .

.
.
.

2569 . . . . . . . . . . . . . . . . . . . . . . . . . . . . . . . . . . . . . . . . . . . . . . . .

19a

| 80 | 90 | 100 | 110 | 120 | 130 | 140 | 150 |
| 81 | 91 | 101 | 111 | 121 | 131 | 141 | 151 |
| 82 | 92 | 102 | 112 | 122 | 132 | 142 | 152 |

.
.
.

| 89 | 99 | 109 | 119 | 129 | 139 | 149 | 159 |

2710 . . . . . . . . . . . . . . . . . . . . . . . . . . . . . . . . . . . . . . . . . . . . . . . . 2710

.
.
.

. . . . . . . . . . . . . . . . . . . . . . . . . . . . . . . . . . . . . . . . . . . . . . . . 2719

18b

| 160 | 170 | 180 | 190 | 200 | 210 | 220 | 230 |
| 161 | 171 | 181 | 191 | 201 | 211 | 221 | 231 |
| 162 | 172 | 182 | 192 | 202 | 212 | 222 | 232 |

.
.
.

| 169 | 179 | 189 | 199 | 209 | 219 | 229 | 239 |

2720 . . . . . . . . . . . . . . . . . . . . . . . . . . . . . . . . . . . . . . . . . . . . . . . .

.
.
.

2729 . . . . . . . . . . . . . . . . . . . . . . . . . . . . . . . . . . . . . . . . . . . . . . . .

19b

| 240 | 250 | 260 | 270 | 280 | 290 | 300 | 310 |
| 241 | 251 | 261 | 271 | 281 | 291 | 301 | 311 |
| 242 | 252 | 262 | 272 | 282 | 292 | 302 | 312 |

.
.
.

| 249 | 259 | 269 | 279 | 289 | 299 | 309 | 319 |

2870 . . . . . . . . . . . . . . . . . . . . . . . . . . . . . . . . . . . . . . . . . . . . . . . . 2870

.
.
.

. . . . . . . . . . . . . . . . . . . . . . . . . . . . . . . . . . . . . . . . . . . . . . . . 2879

18p

2400 . . . . . . . . . . . . . . . . . . . . . . . . . . 2470

.
.
.

2409 . . . . . . . . . . . . . . . . . . . . . . . . . . 2479

4960 . . . . . . . . . . . . . . . . . . . . . . . . . . . . . . . . . . . . . . . . . . . . . . . .

.
.
.

4969 . . . . . . . . . . . . . . . . . . . . . . . . . . . . . . . . . . . . . . . . . . . . . . . .

19p

2480 . . . . . . . . . . . . . . . . . . . . . . . . . . 2550

.
.
.

2489 . . . . . . . . . . . . . . . . . . . . . . . . . . 2559

. . . . . . . . . . . . . . . . . . . . . . . . . . . . . . . . . . . . . . . . . . . . . . . . 5110

.
.
.

. . . . . . . . . . . . . . . . . . . . . . . . . . . . . . . . . . . . . . . . . . . . . . . . 5119